# EUROPÄISCHE PATENTANMELDUNG

(11) **EP 4 781 873 A1**
(43) Veröffentlichungstag der Anmeldung: **29.07.2026**
(21) Anmeldenummer: 26153711.2
(22) Anmeldetag: 23.01.2026
(51) Int. Cl.: A47J 27/08, A47J 27/14, A47J 36/12

(54) **GARGERÄT**

(30) Priorität: 24.01.2025 DE 102025102669
(71) Anmelder: MKN Maschinenfabrik Kurt Neubauer GmbH & Co. KG, 38300 Wolfenbüttel (DE)
(72) Erfinder: HELM, Peter, 38300 Wolfenbüttel (DE)
(74) Vertreter: Berghofer, Benedikt

(57) **Zusammenfassung**

Ein erfindungsgemäßes gewerbliches Gargerät (2) umfasst ein Gehäuse (4) mit einem Garraum (6) und einen Deckel (8) zum Verschließen des Garraums (6), der mittels zumindest zweier Lagereinrichtungen (14) schwenkbar am Gehäuse (4) gelagert ist. Die zumindest zwei Lagereinrichtungen (14) umfassen jeweils eine Unterstützungseinrichtung (18), die ein vorbestimmtes Gegendrehmoment ausübt, das einem durch den Deckel (8) erzeugten Drehmoment entgegenwirkt, wobei ab einem vorbestimmten Schwenkwinkel (α) des Deckels (8) die Summe aller Gegendrehmomente größer oder gleich dem durch den Deckel (8) erzeugten Drehmoment ist.

## Beschreibung

Die vorliegende Erfindung betrifft ein gewerbliches Gargerät zum Garen von Gargütern. Derartige Gargeräte sind zum Zubereiten großer Mengen von Speisen in Großküchen eingerichtet und umfassen ein Gehäuse, einen tiegelförmigen Garraum zur Aufnahme eines Garmediums und/oder von Gargütern, der in dem Gehäuse ausgebildet ist, und einen Deckel zum Verschließen des tiegelförmigen Garraums, wobei der Deckel mittels einer Lagereinrichtung schwenkbar am Gehäuse gelagert ist.

Der tiegelförmige Garraum gewerblicher Gargeräte ist fest in das Gargerät integriert und weist üblicherweise ein hohes Fassungsvermögen von beispielsweise 100 l bis 200 I auf. Entsprechend groß ist der Garraum und somit der Deckel dimensioniert. Dadurch bedingt kann der Deckel ein hohes Eigengewicht aufweisen, wodurch das häufige Öffnen und Schließen des Deckels insbesondere unter den Bedingungen einer gewerblichen Großküche mühsam ist. Zudem kann ein Griff des Deckels bei vollständig geöffnetem Deckel oft nur schwer erreicht werden, was vor allem kleine Gerätebediener betrifft.

Es sind daher Gargeräte bekannt, bei denen der Deckel federunterstützt gelagert ist, sodass die von einem Gerätebediener aufzuwendende Kraft verringert wird. Die verwendeten Federn sind dabei üblicherweise oberhalb der Oberfläche des Gargeräts vorgesehen und axial zur Schwenkachse des Deckels ausgerichtet. Bekannte Systeme weisen jedoch eine Reihe von Nachteilen auf. Zum einen sind die Federn aufgrund der beschriebenen Position hinter dem Garraum und dem Deckel schwer zugänglich, weshalb eine Einstellung und Wartung solcher Systeme mühsam ist. Zum anderen ist der an dieser Stelle im Bereich der Schwenkachse zur Verfügung stehende Bauraum begrenzt, was wiederum zur Einschränkung verwendbarer Federn führt. Zudem wird das Öffnen des Deckels zwar erleichtert, das Erreichen des Griffs in der geöffneten Stellung des Deckels kann jedoch immer noch problematisch sein und dazu führen, dass vor allem kleine Gerätebediener den Deckel nur schwer erreichen können oder den Deckel zum Beschicken, Entleeren oder Reinigen des Garraums in einer für sie erreichbaren Position halten müssen.

Der vorliegenden Erfindung liegt daher die Aufgabe zugrunde, ein Gargerät bereitzustellen, das dauerhaft einfach zu bedienen ist und zugleich gute Wartungsmöglichkeiten bietet.

Diese Aufgabe wird durch den Gegenstand des Anspruchs 1 gelöst. Bevorzugte Ausführungsformen sind Gegenstand der abhängigen Ansprüche.

Ein erfindungsgemäßes gewerbliches Gargerät zum Garen von Gargütern umfasst ein Gehäuse und einen tiegelförmigen Garraum zur Aufnahme eines Garmediums und/oder Garguts, der in dem Gehäuse ausgebildet ist, und einen Deckel zum Verschließen des tiegelförmigen Garraums, wobei der Deckel mittels zumindest zweier Lagereinrichtungen zwischen einer geschlossenen Stellung und einer geöffneten Stellung um eine Schwenkachse schwenkbar am Gehäuse gelagert ist, wobei die zumindest zwei Lagereinrichtungen jeweils eine Unterstützungseinrichtung umfassen, die dazu eingerichtet ist, in Abhängigkeit von der Schwenkstellung des Deckels ein vorbestimmtes Gegendrehmoment auszuüben, das einem durch den Deckel erzeugten Drehmoment entgegenwirkt. Die Unterstützungseinrichtungen der zumindest zwei Lagereinrichtungen sind derart ausgelegt, dass ab einem vorbestimmten Schwenkwinkel des Deckels ausgehend von der geschlossenen Stellung des Deckels die Summe aller Gegendrehmomente größer oder gleich dem durch den Deckel erzeugten Drehmoment ist.

Auf diese Art und Weise wird ein Gargerät bereitgestellt, das mindestens zwei Unterstützungseinrichtungen umfasst, die derart ausgelegt sind, dass ab dem vorbestimmten Schwenkwinkel ein selbstständiges Zurückschwenken bzw. Fallen des Deckels in die geschlossene Stellung verhindert wird. Der Deckel kann folglich nicht nur ohne großen Kraftaufwand in eine gewünschte Stellung angehoben werden, sondern wird aus dieser ohne Zutun des Bedieners nicht mehr absinken. Dadurch wird ein hoher Bedienkomfort und insbesondere eine körperliche Entlastung erreicht, während zugleich die Sicherheit der Bediener des Gargeräts erhöht wird.

Mittels der zumindest zwei Lagereinrichtungen ist der Deckel um die Schwenkachse schwenkbar am Gehäuse gelagert. Die Gewichtskraft des Deckels bewirkt dabei ein Drehmoment um die Schwenkachse. Bis zu einer Stellung, in der der Schwerpunkt des Deckels über die Schwenkachse hinwegbewegt wird, zieht die Gewichtskraft bzw. das durch diese bewirkte Drehmoment den Deckel zurück in die geschlossene Stellung. Die Unterstützungseinrichtungen erzeugen jeweils ein Gegendrehmoment um die Schwenkachse, das dem Drehmoment des Deckels entgegenwirkt. Diese Gegendrehmomente können derart ausgelegt sein, dass sie in einem Bereich des Schwenkwinkels mit dem Drehmoment des Deckels im Wesentlichen im Gleichgewicht stehen. Mithin ist die Summe aller Gegendrehmomente aller Unterstützungseinrichtungen dann im Wesentlichen gleich dem durch den Deckel erzeugten Drehmoment. Falls gewünscht, können die Gegendrehmomente bei einem größeren Schwenkwinkel ausgehend von der geschlossenen Stellung größer als das Drehmoment des Deckels sein und dadurch nicht nur das selbständige Zurückschwenken des Deckels in die geschlossene Stellung verhindern, sondern ein weiteres Anheben des Deckels bewirken.

Bis zu dem vorbestimmten Schwenkwinkel ist jedoch ein selbständiges Zurückschwenken des Deckels sichergestellt, sodass dieser bei Verwendung des Gargeräts den Garraum zuverlässig verschließt. Bevorzugt ist daher zwischen der geschlossenen Stellung des Deckels und dem vorbestimmten Schwenkwinkel die Summe aller Gegendrehmomente kleiner als das durch den Deckel erzeugte Drehmoment.

Besonders vorteilhaft sind die Unterstützungseinrichtungen der zumindest zwei Lagereinrichtungen derart ausgelegt, dass sich der Deckel zumindest in allen Positionen zwischen dem vorbestimmten Schwenkwinkel und einem Winkel von 90° ausgehend von der geschlossenen Stellung des Deckels im Gleichgewicht befindet. Mit anderen Worten kann die Summe aller Gegendrehmomente in allen Positionen zwischen dem vorbestimmten Schwenkwinkel und einer vertikalen Stellung des Deckels, ggf. auch bis zu der vollständig geöffneten Stellung des Deckels, im Wesentlichen dem durch den Deckel erzeugten Drehmoment entsprechen. Befindet sich der Deckel im Gleichgewicht, liegt eine Differenz zwischen der Summe aller Gegendrehmomente und dem durch den Deckel erzeugten Drehmoment vorzugsweise im Bereich auftretender Verluste, wie z.B. Reibungsverluste. Dadurch verbleibt der Deckel immer in der Stellung, in die er durch den Bediener bewegt wird, sinkt also weder von selbst ab, noch wird er weiter angehoben. Sind zum Beispiel weitere Zutaten in den Garraum zu geben, muss der Deckel nicht vollständig geöffnet werden, der Bediener hat aber trotzdem beide Hände frei und muss den Deckel nicht halten. Das ist zeit- und kraftsparend und insbesondere kleine Bediener können den Deckel in allen Situationen nur so weit öffnen, dass ein Griff zum Führen des Deckels für sie noch gut erreichbar ist, auch wenn sie dabei die vollständig geöffnete Stellung nicht erreichen.

Das Gargerät umfasst zumindest zwei, also zwei oder mehr Lagereinrichtungen. Jede Lagereinrichtung umfasst zumindest eine Unterstützungseinrichtung, kann also auch mehr als eine Unterstützungseinrichtung umfassen. Jede Unterstützungseinrichtung bewirkt ein Gegendrehmoment auf den Deckel. Die Summe aller Gegendrehmomente ist definiert als die Summe der Gegendrehmomente aller Unterstützungseinrichtungen aller Lagereinrichtungen des Gargeräts. Es versteht sich, dass neben den zumindest zwei Lagereinrichtungen, die erfindungsgemäß zumindest eine Unterstützungseinrichtung aufweisen, auch weitere Lagerstellen zum schwenkbaren Lagern des Deckels vorgesehen sein können, beispielsweise in Form einfacher Drehgelenke, die keine Unterstützungseinrichtung aufweisen.

Es hat sich herausgestellt, dass bei gewerblichen Gargeräten der eingangs beschriebenen Art mindestens zwei Lagereinrichtungen von Vorteil sind, um auch bei kleinen vorbestimmten Schwenkwinkeln, wie z.B. von 5° oder 10°, eine ausreichend hohe Summe von Gegendrehmomenten bereitzustellen. In einer beispielhaften Ausführungsform umfasst das Gargerät vier Lagereinrichtungen, die jeweils eine Unterstützungseinrichtung umfassen. Alternativ kann das Gargerät zwei Lagereinrichtungen umfassen, die jeweils zwei Unterstützungseinrichtungen aufweisen. Je mehr Unterstützungseinrichtungen vorgesehen sind, desto größer kann die Summe aller Gegendrehmomente sein, sodass diese auch bei besonders schweren Deckeln größer oder gleich dem durch den Deckel erzeugten Drehmoment ist. Alternativ kann durch Verteilung der Last auf mehrere Unterstützungseinrichtungen jede Unterstützungseinrichtung kleiner dimensioniert werden, sodass der Einsatz kostengünstigerer Elemente möglich ist. Es ist auch denkbar, dass die Unterstützungseinrichtungen unterschiedliche Charakteristika aufweisen, um zum Beispiel über den gesamten Schwenkbereich des Deckels das gewünschte Gegendrehmoment bereitzustellen.

Vorteilhafterweise beträgt der vorbestimmte Schwenkwinkel zwischen 5° und 45°, bevorzugt zwischen 10° und 30°, wobei auch alle Werte zwischen den angegebenen Grenzwerten von der Offenbarung umfasst sein sollen. Ab diesem Schwenkwinkel ist eine Rückbewegung des Deckels in die geschlossene Stellung verhindert. Unabhängig von diesen exakten Werten ist der vorbestimmte Schwenkwinkel vorzugsweise einstellbar, insbesondere durch Einstellung der wirkenden Gegendrehmomente. Hierbei können Größe und Gewicht des Deckels sowie die Reibung der sich bewegenden Elemente Berücksichtigung finden.

In der geschlossenen Stellung beträgt der Schwenkwinkel 0°. Der Deckel kann im Wesentlichen horizontal angeordnet sein. In der vollständig geöffneten Stellung beträgt der Schwenkwinkel vorzugsweise zumindest 90° und mehr bevorzugt über 90°, beispielsweise zwischen 100° und 110° ausgehend von der geschlossenen Stellung. Dadurch wird der Schwerpunkt des Deckels beim Öffnen über die Schwenkachse bewegt, sodass der Deckel auch ohne Unterstützung in der vollständig geöffneten Stellung verbleibt. Die Unterstützungseinrichtungen der zumindest zwei Lagereinrichtungen ermöglichen, dass der Deckel auch in geöffneten Stellungen über dem vorbestimmten Schwenkwinkel in diesen verbleibt oder sich in Richtung vollständig geöffnete Stellung bewegt.

Die Unterstützungseinrichtungen der zumindest zwei Lagereinrichtungen erstrecken sich vorzugsweise im Wesentlichen parallel zu einer Richtung, die radial zur Schwenkachse ausgerichtet ist. Dadurch ist der für die Unterstützungseinrichtungen verfügbare Bauraum nicht auf den Bauraum zwischen den Lagereinrichtungen begrenzt und es sind besonders vorteilhafte Ausführungsformen von Unterstützungseinrichtungen realisierbar, insbesondere auch solche, die Zug- oder Druckkräfte bewirken und einfach und kostengünstig umsetzbar sind.

Die zumindest zwei Lagereinrichtungen können jeweils einen Lagerbock umfassen, der fest mit dem Gehäuse des Gargeräts verbunden ist. Beispielsweise ist jeder Lagerbock mit dem Gehäuse verschraubt. Der Deckel kann an den Lagerböcken der zumindest zwei Lagereinrichtungen drehbar gelagert sein.

In einer bevorzugten Ausführungsform umfasst der Deckel zumindest zwei Lagerelemente, die drehfest mit dem Deckel verbunden sind, wobei jeweils ein Lagerelement mittels einer der zumindest zwei Lagereinrichtungen drehbar am Gehäuse gelagert ist. Mit anderen Worten umfasst der Deckel zumindest ein erstes Lagerelement und ein zweites Lagerelement, wobei das erste Lagerelement mittels einer ersten Lagereinrichtung der zumindest zwei Lagereinrichtungen drehbar am Gehäuse gelagert ist und das zweite Lagerelement mittels einer zweiten Lagereinrichtung der zumindest zwei Lagereinrichtungen drehbar am Gehäuse gelagert ist. Vorzugsweise entspricht die Anzahl von Lagerelementen der Anzahl von Lagereinrichtungen.

Jeweils ein Lagerelement der zumindest zwei Lagerelemente ist mit einer der Unterstützungseinrichtungen der zumindest zwei Lagereinrichtungen gekoppelt. Insbesondere ist das jeweilige Lagerelement wirkend mit der Unterstützungseinrichtung verbunden, um das von der Unterstützungseinrichtung generierte Gegendrehmoment auf das Lagerelement zu übertragen. Dadurch kann eine Kraft von den Unterstützungseinrichtungen über die zumindest zwei Lagerelemente auf den Deckel übertragen werden.

Die zumindest zwei Lagerelemente sind vorzugsweise um die Schwenkachse drehbar gelagert, beispielsweise im Lagerbock der jeweiligen Lagereinrichtung. Die zumindest zwei Lagerelemente sind vorzugsweise als Wellenzapfen ausgebildet. Die Wellenzapfen können beispielsweise drehfest mit einem Flansch oder einer Lasche verbunden sein, die wiederum fest am Deckel angebracht sind.

Die Unterstützungseinrichtungen der zumindest zwei Lagereinrichtungen erstrecken sich bevorzugt von den zumindest zwei Lagerelementen aus in das Gehäuse des Gargeräts. Insbesondere kann der tiegelförmige Garraum in einer Oberfläche des Gehäuses ausgebildet sein und die Unterstützungseinrichtungen erstrecken sich von den zumindest zwei Lagerelementen aus unter die Oberfläche des Gehäuses. Vorzugsweise erstrecken sich die Unterstützungseinrichtungen im Lagerbock der jeweiligen Lagereinrichtung in das Gehäuse. Dadurch sind die Unterstützungseinrichtungen vor Wasser und Verunreinigungen geschützt, sodass eine dauerhaft zuverlässige Funktion und ein geringer Wartungsaufwand gewährleistet sind. Außerdem steht innerhalb des Gargeräts ausreichend Bauraum zur Verfügung, um die Unterstützungseinrichtungen entsprechend den vorliegenden Anforderungen zu gestalten und zu dimensionieren.

In einer bevorzugten Ausführungsform umfassen die Unterstützungseinrichtungen der zumindest zwei Lagereinrichtungen jeweils eine Gegenkrafteinrichtung, die dazu eingerichtet ist, eine das Gegendrehmoment bewirkende Gegenkraft zu erzeugen. Die Gegenkrafteinrichtung kann exzentrisch mit dem jeweiligen Lagerelement verbunden sein. Vorzugsweise ist die Gegenkrafteinrichtung über eine Verbindungsstange exzentrisch mit dem Lagerelement verbunden. Dadurch bewirkt die Gegenkraft besonders einfach ein Gegendrehmoment am Lagerelement, das über das Lagerelement direkt auf den Deckel wirkt. Bevorzugt ist zumindest die Gegenkrafteinrichtung unter der Oberfläche des Gehäuses angeordnet, da es sich dabei um den größten Bestandteil der Unterstützungseinrichtung handelt.

Vorzugsweise greift die Gegenkrafteinrichtung über die Verbindungsstange an einem Hebel an, der exzentrisch mit einer Scheibe verbunden ist, wobei die Scheibe drehfest mit dem Lagerelement gekoppelt ist. Genauer kann die Verbindungsstange fest mit dem Hebel verbunden sein und der Hebel kann drehbar an bzw. auf der Scheibe gelagert sein, die wiederum drehfest mit dem Lagerelement verbunden ist, das bevorzugt als Wellenzapfen ausgebildet ist. Der Hebel kann separat oder integral mit der Verbindungsstange ausgebildet sein. Die Scheibe kann zum Beispiel kraft- und/oder formschlüssig mit dem Lagerelement verbunden sein oder integral mit diesem ausgebildet sein. Auf diese Weise wird die Scheibe durch eine Drehung des Deckels und des Lagerelements in Drehung versetzt und umgekehrt. Die Scheibe ist vorzugsweise um die Schwenkachse drehbar gelagert. Durch den exzentrisch mit der Scheibe verbundenen Hebel erzeugt die Gegenkrafteinrichtung daher das Gegendrehmoment um die Schwenkachse. Insgesamt wird somit eine sehr robuste und wirksame Unterstützungseinrichtung geschaffen, die vorteilhafterweise nur wenige Teile benötigt, um das Gegendrehmoment zu erzeugen und auf den Deckel zu übertragen.

Die Gegenkrafteinrichtung ist, bevorzugt mittels der Verbindungsstange, mit dem Lagerelement verbunden. Eine Seite der Gegenkrafteinrichtung bzw. ein Ende der Verbindungsstange ist also am Lagerelement gelagert. Die andere Seite der Gegenkrafteinrichtung bzw. das andere Ende der Verbindungsstange ist vorzugsweise ein freies Ende, das im Gehäuse des Gargeräts frei beweglich ist.

Besonders bevorzugt ist die Gegenkrafteinrichtung als Federeinrichtung ausgebildet. Die Federeinrichtung ist in einem bevorzugten Ausführungsbeispiel eine Druckfeder, insbesondere eine Schraubenfeder. Hierbei ergibt sich der Vorteil, dass bei Bruch der Druckfeder diese nur um eine Windung zusammenbricht, der Federdruck ansonsten aber aufrechterhalten bleibt, insbesondere wenn die Federwindungen eng zusammenliegen und die Feder auf der Verbindungsstange geführt ist. Die Federeinrichtung kann aber auch als Zugfeder ausgebildet sein. Damit über einen möglichst großen Bereich des Schwenkwinkels des Deckels ein Momentengleichgewicht realisiert werden kann, können die Federeinrichtungen der Unterstützungseinrichtungen jeweils eine degressive Federkennlinie aufweisen.

Vorzugsweise wird die Gegenkraft ausschließlich durch die Federeinrichtung erzeugt. Auf ein Gegengewicht, das aufgrund seiner Gewichtskraft eine Gegenkraft bzw. ein Gegendrehmoment in nennenswertem Ausmaß bewirkt, kann verzichtet werden. Es versteht sich, dass die hierin beschriebenen Komponenten der Lagereinrichtungen und Gegenkrafteinrichtungen auch eine gewisse Gewichtskraft aufweisen. Diese wirkt dem durch den Deckel erzeugten Drehmoment jedoch nicht oder nicht nennenswert entgegen.

Vorzugsweise erstreckt sich die Verbindungsstange durch die Federeinrichtung. Die Federeinrichtung ist also auf der Verbindungsstange gelagert. Dadurch wirkt die durch die Federeinrichtung erzeugte Gegenkraft parallel zur Verbindungsstange und kann bei platzsparendem Aufbau gut auf diese übertragen werden. Bevorzugt wirkt die Verbindungsstange mit einem ersten Widerlager für die Federeinrichtung zusammen, das beispielsweise als Halteplatte ausgebildet ist, gegen die die Federeinrichtung drückt. Dadurch wird die Federkraft der Federeinrichtung über die Halteplatte auf die Verbindungsstange übertragen und erzeugt somit die notwendige Gegenkraft, die zusammen mit dem Hebel das Gegendrehmoment erzeugt.

Beispielsweise kann ein erster Endabschnitt der Verbindungsstange mit der Scheibe verbunden sein, insbesondere mittels des Hebels, und ist die Halteplatte in einem zweiten Endabschnitt der Verbindungsstange, der dem ersten Ende gegenüberliegt, vorgesehen.

Weiterhin ist vorteilhaft, dass die Verbindungsstange als Gewindestange ausgebildet ist, die sich durch die Halteplatte hindurch und über diese hinaus erstreckt. Die Halteplatte kann auf die Verbindungsstange geschraubt sein oder auf die Verbindungsstange gesteckt und mittels einer Mutter gesichert sein. Durch Verändern der Position der Halteplatte entlang der Verbindungsstange kann somit der Federweg und folglich die von der Federeinrichtung erzeugte Gegenkraft eingestellt werden.

Alternativ zu einer Gewindestange kann die Verbindungsstange als eine einfache Stange ausgebildet sein. Beispielsweise kann eine umlaufende Nut an der Verbindungsstange vorgesehen sein, in der ein Sicherungs- oder Sprengring die Halteplatte an der Verbindungsstange sichert, oder kann die Verbindungsstange ein Querloch aufweisen, durch das ein Stift gesteckt ist, der die Halteplatte sichert. Zwar ist dann zumindest keine stufenlose Einstellbarkeit der Federeinrichtung mehr gegeben, dafür können aber mögliche Fehleinstellungen vermieden werden.

Es ist weiterhin bevorzugt, dass die zumindest zwei Lagereinrichtungen jeweils ein zweites Widerlager für die Federeinrichtung umfassen, an dem die Federeinrichtung abgestützt ist.

Das zweite Widerlager liegt vorzugsweise dem ersten Widerlager entlang der Verbindungsstange gegenüber, sodass die Federeinrichtung dazwischen aufgenommen ist. Das zweite Widerlager kann eine Öffnung aufweisen, durch die die Verbindungsstange hindurchtritt. Dadurch kann die Federeinrichtung am zweiten Widerlager abgestützt sein und die Verbindungsstange, die sich durch die Federeinrichtung hindurch erstreckt, kann durch das zweite Widerlager hindurchtreten, um mit der Scheibe gekoppelt zu sein.

Vorzugsweise ist das zweite Widerlager in einer Durchgangsöffnung in der Oberfläche des Gehäuses des Gargeräts angeordnet. Dadurch kann sich die Verbindungsstange zugleich durch die Oberfläche des Gehäuses erstrecken, sodass die Federeinrichtung im Inneren des Gehäuses angeordnet sein kann. Jeder Lagerbock der zumindest zwei Lagereinrichtungen kann eine Bodenplatte aufweisen, in der eine Öffnung ausgebildet ist, die mit der Durchgangsöffnung in der Oberfläche des Gehäuses fluchtet und in der das zweite Widerlager aufgenommen ist.

In einer ersten Ausführungsform ist das zweite Widerlager bevorzugt zumindest zweiteilig ausgebildet, wobei das zweite Widerlager ein erstes Widerlagerelement und ein zweites Widerlagerelement umfasst, die relativ zueinander schwenkbar in Verbindung stehen. Vorzugsweise bildet das erste Widerlagerelement des zweiten Widerlagers einen Sitz für die Federeinrichtung und ist das zweite Widerlagerelement des zweiten Widerlagers fest am Gehäuse angebracht. Dadurch wird eine Bewegung der Verbindungsstange und der Federeinrichtung ermöglicht, wenn die Scheibe um die Schwenkachse dreht. Das zweite Widerlagerelement kann in der Durchgangsöffnung in der Oberfläche des Gehäuses angeordnet sein, wie zuvor beschrieben.

Beispielsweise weist das erste Widerlagerelement eine konvexe Oberseite auf und weist das zweite Widerlagerelement eine konkave Unterseite auf, die miteinander eingreifen und dadurch ein Gelenk bilden. Die Federkraft der Federeinrichtung drückt das erste Widerlagerelement gegen das zweite Widerlagerelement, sodass sich diese selbst zentrieren.

In einer zweiten Ausführungsform ist das zweite Widerlager bevorzugt einteilig ausgebildet und umfasst ein elastisches Element. Vorzugsweise bildet das elastische Element einen Sitz für die Federeinrichtung und ist fest am Gehäuse angebracht. Das elastische Element ist elastisch verformbar und kann dadurch die Bewegung der Verbindungsstange und der Federeinrichtung ermöglichen. Das elastische Element kann in der Durchgangsöffnung in der Oberfläche des Gehäuses angeordnet sein, wie zuvor beschrieben.

Das elastische Element kann einen rechteckigen Querschnitt, ggf. mit abgerundeten Ecken, oder einen runden Querschnitt aufweisen. An den Stirnenden kann das elastische Element jeweils eine Geometrie aufweisen, die das Lagern der Federeinrichtung am elastischen Element bzw. des elastischen Elements am Gehäuse ermöglicht. Bevorzugte Dimensionen des elastischen Elements sind besonders vorteilhaft für einen optimalen Kompromiss aus Festigkeit und Beständigkeit einerseits und Elastizität andererseits. Dabei kann das elastische Element eine Länge aufweisen, die zwischen 20 mm und 50 mm, vorzugsweise zwischen 30 mm und 40 mm beträgt. Die Länge ist vorzugsweise parallel zur Längsachse der Verbindungsstange definiert. Eine Seitenlänge bzw. ein Durchmesser des elastischen Elements kann zwischen 10 mm und 40 mm, vorzugsweise zwischen 20 mm und 30 mm betragen.

Das elastische Element ist vorzugsweise aus einem Elastomer gebildet. Insbesondere kann das elastische Element gebildet sein aus einem Material, das gewählt ist aus einer Gruppe umfassend Polyurethan, Polyesterurethan, Polyethylen und Polypropylen.

Damit eine ausreichende Elastizität und Stabilität gegeben sind, weist das elastische Element vorzugsweise eine Härte auf, die zwischen 70 Shore A und 50 Shore D, vorzugsweise zwischen 80 Shore A und 100 Shore A beträgt. Die Shore Härte ist nach DIN ISO 48-4:2021-02 zu bestimmen. Für Materialien, die nicht nach DIN ISO 48-4:2021-02 gemessen werden können, ist die Shore Härte nach DIN EN ISO 868:2003 zu bestimmen.

Grundsätzlich ist das zweite Widerlager vorzugsweise derart ausgebildet, dass die Verbindungsstange über einen Winkelbereich bewegbar ist, der zwischen 3° und 25°, vorzugsweise zwischen 5° und 15°, beträgt. In der ersten Ausführungsform kann die Beweglichkeit des ersten Widerlagerelements relativ zum zweiten Widerlagerelement entsprechend ausgelegt sein. In der zweiten Ausführungsform kann die elastische Verformung des elastischen Elements entsprechend ausgelegt sein.

Vorzugsweise weisen die zumindest zwei Lagereinrichtungen jeweils wenigstens einen ersten Anschlag auf und die Scheiben der zumindest zwei Lagereinrichtungen weisen jeweils wenigstens einen zweiten Anschlag auf, der in der vollständig geöffneten Stellung oder der geschlossenen Stellung des Deckels an dem wenigstens einen ersten Anschlag anliegt. Der erste Anschlag kann z.B. an dem Lagerbock der Lagereinrichtung vorgesehen sein, beispielsweise in Form eines Absatzes an einer Seitenwand desselben. Der zweite Anschlag kann Form einer Stufe oder eines nockenförmigen Vorsprungs an der Scheibe vorgesehen sein. Auf diese Weise können der erste Anschlag und der zweite Anschlag besonders einfach eine maximale Schwenkstellung des Deckels definieren, ohne dass zusätzliche Komponenten erforderlich sind. Es kann ein dritter Anschlag am Lagerbock und ein vierter Anschlag an der Scheibe vorgesehen sein, sodass zwei Paare von Anschlägen vorliegen, die die geschlossene Stellung des Deckels einerseits und die vollständig geöffnete Stellung des Deckels andererseits festlegen.

Ein gewerbliches Gargerät ist zum Einsatz in gewerblichen Großküchen vorgesehen und eingerichtet. In gewerblichen Großküchen (z.B. in Kantinen, Restaurants, auf Kreuzfahrtschiffen, etc.) werden Nahrungsmittel in großen Mengen und bei hohem Durchsatz zubereitet. Gewerbliche Gargeräte zeichnen sich daher durch ein hohes Fassungsvermögen und eine hohe Robustheit aus. Sie sind in der Regel länger und/oder öfter im Einsatz und werden wesentlich stärker beansprucht als z.B. Haushaltsgeräte.

Gewerbliche Gargeräte sind üblicherweise stationär angeordnet und können fest mit dem Wasser- und Abwassernetz verbunden sein. Alternativ können die Gargeräte auf Rollen bereitgestellt werden. Um die Handhabung großer Mengen z.B. flüssiger Speisen zu vereinfachen, kann der Garraum, bspw. in Form eines Tiegels im Gehäuse, kippbar sein, insbesondere motorisch kippbar sein. Außerdem kann der Deckel verriegelbar sein. Dies ist vor allem beim Druckgaren erforderlich.

In einer Ausführungsform ist das gewerbliche Gargerät ein Kochkessel. Derartige Kochkessel weisen üblicherweise besonders große und schwere Deckel auf, sodass die Vorteile der vorliegenden Erfindung besonders gut zum Tragen kommen. Bei solchen Kochkesseln ist der Garraum in Form eines Tiegels oder Kessels ausgebildet und fest im Gargerät verbaut, beispielsweise in die Oberfläche des Gehäuses integriert oder schwenkbar an dem Gehäuse angebracht. Beispielsweise kann der Garraum eines Kochkessels ein Fassungsvermögen zwischen 50 l und 500 l, häufig zwischen 50 l und 250 l aufweisen.

In einer alternativen Ausführungsform ist das gewerbliche Gargerät ein Druckgargerät zum Druckgaren von Nahrungsmitteln. In Druckgargeräten werden Nahrungsmittel unter Überdruck zubereitet. Zum Druckgaren ist der Deckel und somit der Garraum daher fest geschlossen und der Deckel vorzugsweise verriegelt. Im Garraum kann zum Druckgaren ein Überdruck zwischen 0,2 bar und 1 bar, vorzugsweise zwischen 0,3 bar und 0,9 bar, mehr bevorzugt zwischen 0,4 bar und 0,8 bar herrschen. Um dem standzuhalten, ist der Deckel üblicherweise verstärkt und daher besonders schwer. Auch hier ist die Anwendung der vorliegenden Erfindung daher besonders vorteilhaft.

Weitere Einzelheiten, Merkmale und Vorteile der vorliegenden Erfindung ergeben sich aus der nachfolgenden beispielhaften Beschreibung eines bevorzugten Ausführungsbeispiels der vorliegenden Erfindung unter Bezugnahme auf die beigefügten Zeichnungen.
- Fig. 1: zeigt in einer perspektivischen Ansicht ein erfindungsgemäßes Gargerät mit einem Deckel, der mittels vier Lagereinrichtungen schwenkbar gelagert ist.
- Fig. 2: zeigt in einer perspektivischen Ansicht eine beispielhafte erste Ausführungsform einer der Lagereinrichtungen des Deckels des erfindungsgemäßen Gargeräts, wobei sich der Deckel in einer geschlossenen Stellung befindet.
- Fig. 3: zeigt die Lagereinrichtung nach Fig. 2, wobei sich der Deckel in einer geöffneten Stellung befindet.
- Fig. 4: zeigt in einer perspektivischen Ansicht eine beispielhafte zweite Ausführungsform einer der Lagereinrichtungen des Deckels des erfindungsgemäßen Gargeräts, wobei sich der Deckel in einer geschlossenen Stellung befindet.

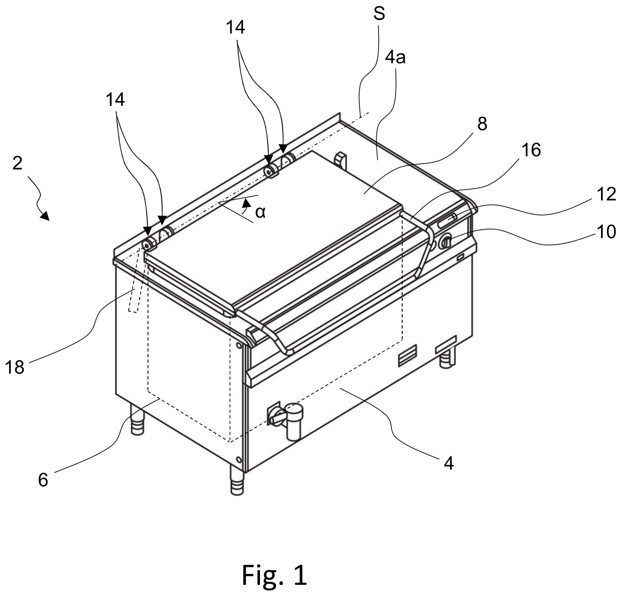

In Fig. 1 ist ein erfindungsgemäßes gewerbliches Gargerät 2 in einer perspektivischen Ansicht dargestellt. Das Gargerät 2 umfasst ein Gehäuse 4 und einen tiegelförmigen Garraum 6 zur Aufnahme eines Garmediums und/oder eines Garguts, der in dem Gehäuse 4 ausgebildet ist. Der tiegelförmige Garraum 6 ist hier nach oben offen in einer Oberfläche 4a des Gehäuses 4 ausgebildet. Das Gargerät 2 umfasst weiterhin einen Deckel 8 zum Verschließen des Garraums 6, der in Fig. 1 in einer geschlossenen Stellung dargestellt ist, in der er den Garraum 6 verschließt. Der Garraum 6 ist deshalb nur gestrichelt angedeutet.

Im Gehäuse 4 kann weiterhin eine Heizeinrichtung (nicht dargestellt) auf bekannte Art und Weise vorgesehen sein, die dazu eingerichtet ist, in dem Garraum 6 enthaltene Garmedien und/oder Gargüter zu erwärmen. Zum Betätigen der Heizeinrichtung kann das Gargerät 2 ein Bedienelement 10 in Form eines Drehknebels aufweisen. Ein Betriebszustand der Heizeinrichtung, wie zum Beispiel eine eingestellte Heizstufe oder ein aktivierter Vorheizvorgang, kann auf einer Anzeigeeinrichtung 12 des Gargeräts 2 angezeigt werden.

Der Deckel 8 ist mittels zumindest zweier Lagereinrichtungen 14 zwischen der geschlossenen Stellung und einer geöffneten Stellung um eine Schwenkachse S schwenkbar am Gehäuse 4 gelagert. Damit ein Bediener den Deckel 8 greifen und zwischen der geschlossenen Stellung und der geöffneten Stellung schwenken kann, kann ein Griff 16 am Deckel 8 vorgesehen sein. Der Deckel 8 kann ein hohes Gewicht aufweisen, was die Handhabung für einen Bediener des Gargeräts 2 sehr mühsam macht. Hinzu kommt, dass der Griff 16 in der vollständig geöffneten Stellung des Deckels 8 insbesondere für kleine Bediener schwer erreichbar sein kann. Erfindungsgemäß umfassen daher zumindest zwei der Lagereinrichtungen 14 jeweils eine Unterstützungseinrichtung 18, die dazu eingerichtet ist, in Abhängigkeit von der Schwenkstellung des Deckels 8 ein vorbestimmtes Gegendrehmoment auszuüben, das einem durch den Deckel 8 erzeugten Drehmoment entgegenwirkt. Die Unterstützungseinrichtungen 18 sind dabei derart ausgelegt, dass ab einem vorbestimmten Schwenkwinkel α des Deckels 8 ausgehend von der geschlossenen Stellung die Summe aller Gegendrehmomente größer oder gleich dem durch den Deckel 8 erzeugten Drehmoment ist. Dadurch wird der Bediener beim Anheben des Deckels 8 unterstützt und der Deckel 8 verbleibt zumindest in der Position, in die er durch den Bediener gebracht wird, und schwenkt nicht selbstständig zurück in die geschlossene Stellung.

In Fig. 1 ist die Unterstützungseinrichtung 18 der ganz linken Lagereinrichtung 14 gestrichelt angedeutet. In der dargestellten Ausführungsform umfasst das Gargerät 2 vier Lagereinrichtungen 14, von denen zumindest eine weitere Lagereinrichtung 14 ebenfalls eine Unterstützungseinrichtung 18 umfasst. Es können auch drei oder alle vier Lagereinrichtungen 14 jeweils eine Unterstützungseinrichtung 18 umfassen. Sind mehrere Unterstützungseinrichtungen 18 vorgesehen, können diese das gewünschte Gegendrehmoment bereitstellen, ohne übermäßig groß dimensioniert werden zu müssen. Zusätzlich oder alternativ können die Unterstützungseinrichtungen 18 unterschiedliche Charakteristika aufweisen.

Im Folgenden ist unter Bezugnahme auf Fig. 1 bis 3 eine erste Ausführungsform einer Lagereinrichtung 14 mit einer Unterstützungseinrichtung 18 stellvertretend für alle Lagereinrichtungen 14 mit Unterstützungseinrichtung 18 des Gargeräts 2 im Detail beschrieben. Es versteht sich, dass alle Lagereinrichtungen 14 mit Unterstützungseinrichtung 18 des Gargeräts 2 vorteilhafterweise analog aufgebaut sind.

Wie in Fig. 1 zu sehen, kann sich die Unterstützungseinrichtung 18 im Wesentlichen parallel zu einer Richtung erstrecken, die radial zur Schwenkachse S ausgerichtet ist. Vorzugsweise erstreckt sich die Unterstützungseinrichtung 18 vom Bereich der Schwenkachse S durch die Oberfläche 4a des Gehäuses 4 in den Innenraum des Gehäuses 4, um den dort vorhanden Bauraum zu nutzen.

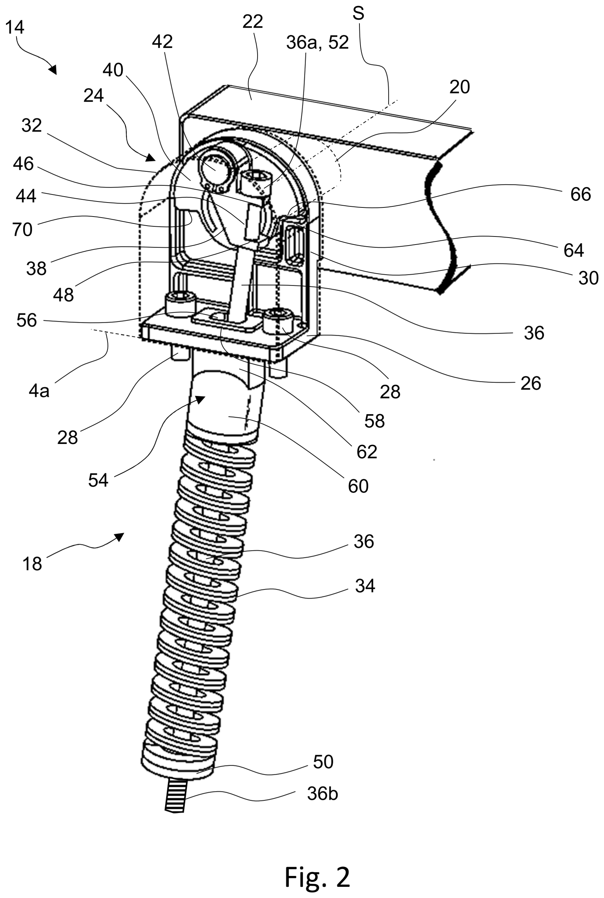

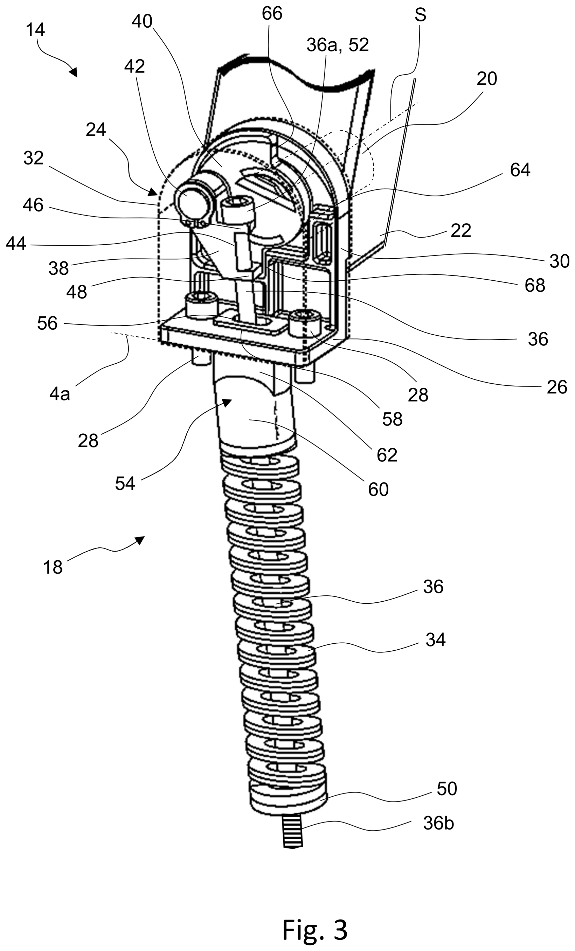

Bezugnehmend auf Fig. 2 und 3, umfasst der Deckel 8 vorzugsweise je Lagereinrichtung 14 ein Lagerelement 20, das drehfest mit dem Deckel 8 verbunden ist und mittels der jeweiligen Lagereinrichtung 14 drehbar am Gehäuse 4 gelagert ist. Das Lagerelement 20 ist hier als Wellenzapfen ausgebildet, der drehfest mit einer Lasche 22 verbunden ist, die fest am Deckel 8 angebracht ist, zum Beispiel an diesen geschraubt oder geschweißt ist. Die Lagereinrichtung 14 kann einen Lagerbock 24 umfassen, der fest mit dem Gehäuse 4 verbunden ist und in dem das Lagerelement 20 drehbar gelagert ist, beispielsweise mittels eines Wälz- oder Gleitlagers (nicht dargestellt). Der Lagerbock 24 kann einen Boden 26 aufweisen, der mittels Schrauben 28 mit der Oberfläche 4a des Gehäuses 4 verschraubt ist. Weiterhin kann der Lagerbock 24 eine Seitenwand 30 aufweisen, die sich im Wesentlichen senkrecht zur Oberfläche 4a des Gehäuses 4 erstreckt und in der das Lagerelement 20 um die Schwenkachse S drehbar gelagert ist. Eine Abdeckung 32 des Lagerbocks 24 ist gestrichelt angedeutet.

Von dem Lagerelement 20 aus erstreckt sich die Unterstützungseinrichtung 18 vorzugsweise unter die Oberfläche 4a in das Gehäuse 4, wo insbesondere Komponenten mit großem Platzbedarf gut untergebracht werden können. Das Lagerelement 20 ist mit der Unterstützungseinrichtung 18 derart gekoppelt, dass ein von der Unterstützungseinrichtung 18 erzeugtes Gegendrehmoment auf das Lagerelement 20 und somit auf den Deckel 8 übertragen wird.

Zum Erzeugen des Gegendrehmoments umfasst die Unterstützungseinrichtung 18 vorzugsweise eine Gegenkrafteinrichtung 34, die dazu eingerichtet ist, eine Gegenkraft zu erzeugen. Die Gegenkrafteinrichtung 34 kann z.B. als Federeinrichtung 34, insbesondere als Druckfeder, ausgebildet sein. Damit die Gegenkraft das Gegendrehmoment bewirkt, kann die Gegenkrafteinrichtung 34 exzentrisch mit dem Lagerelement 20 verbunden sein, wie nachfolgend beschrieben.

In der dargestellten bevorzugten Ausführungsform greift die Gegenkrafteinrichtung 34 über eine Verbindungsstange 36 an einem Hebel 38 an, der exzentrisch mit einer Scheibe 40 verbunden ist. Die Scheibe 40 ist drehfest mit dem Lagerelement 20 gekoppelt, zum Beispiel mittels einer geeigneten Welle-Nabe-Verbindung und gegebenenfalls über ein Zwischenelement, wie eine Buchse oder dergleichen. Der Hebel 38 ist wiederum drehbar an der Scheibe 40 angelenkt, z.B. mittels eines Drehkopfs 42, wobei die Rotationsachse dieser Lagerung beabstandet zur Schwenkachse S des Deckels 8 bzw. des Lagerelements 20 ist. Der Hebel 38 ist wiederum fest mit der Verbindungsstange 36 verbunden, vorzugsweise in einem ersten Endabschnitt 36a der Verbindungsstange 36. Der Hebel 38 kann hierzu eine Lagergabel 44 aufweisen, die einen oberen Schenkel 46 und einen unteren Schenkel 48 umfasst. Sowohl der obere Schenkel 46 als auch der untere Schenkel 48 weisen eine Öffnung zur Aufnahme der Verbindungsstange 36 auf, die sich von dem Hebel 38 nach unten zur Gegenkrafteinrichtung 34 erstreckt. Dabei erstreckt sich die Verbindungsstange 36 im dargestellten Ausführungsbeispiel durch die als Feder ausgebildete Gegenkrafteinrichtung 34 hindurch und über die Gegenkrafteinrichtung 34 hinaus. In einem dem ersten Endabschnitt 36a gegenüberliegenden zweiten Endabschnitt 36b ist die Verbindungsstange 36 vorzugsweise mit einer Halteplatte 50 verbunden, die ein erstes Widerlager für die Federeinrichtung bildet.

Die Verbindungsstange 36 kann als Gewindestange ausgebildet sein, einen Schraubenkopf 52 aufweisen und sich über die Halteplatte 50 hinaus erstrecken. Dadurch kann die Halteplatte 50 entweder selbst auf die Verbindungsstange 36 geschraubt oder mittels einer geeigneten Befestigungseinrichtung, wie beispielsweise einer Mutter, auf der Verbindungsstange 36 fixiert sein. Die Gegenkrafteinrichtung 34 ist hier bevorzugt als Druckfeder ausgebildet, die die Verbindungsstange 36 nach unten drückt. Eine Federkraft der Gegenkrafteinrichtung 34 kann durch Drehen der Verbindungsstange 36, der Halteplatte 50 oder einer die Halteplatte 50 sichernden Mutter eingestellt werden.

Die Lagereinrichtung 14 umfasst bevorzugt ein zweites Widerlager 54, an dem die Federeinrichtung 34 abgestützt ist, sodass die Federeinrichtung 34 zwischen der Halteplatte 50 als erstes Widerlager und dem zweiten Widerlager 54 aufgenommen ist. Damit sich die Verbindungsstange 36, auf der die Federeinrichtung 34 angeordnet ist, bis zum Hebel 38 erstrecken kann, weist das zweite Widerlager 54 eine Öffnung 56 auf, durch die die Verbindungsstange 36 hindurch- und in den Lagerbock 24 eintritt. Die Öffnung 56 kann als Langloch ausgebildet sein, um eine Bewegung der Verbindungsstange 36 mit der Scheibe 40 zu ermöglichen. Wie aus einer Zusammenschau der Figuren 2 und 3 ersichtlich, wird die Verbindungsstange 36 bei Rotation der Scheibe 40 über einen Winkelbereich bewegt, der vorzugsweise zwischen 5° und 25° beträgt. Das zweite Widerlager 54 kann wiederum in einer Durchgangsöffnung 58 im Boden 26 des Lagerbocks 24 sowie in der Oberfläche 4a des Gehäuses 4 angeordnet sein.

In der ersten Ausführungsform nach Fig. 2 und 3 ist das zweite Widerlager 54 vorteilhafterweise zweiteilig ausgebildet, wobei ein erstes Widerlagerelement 60 einen Sitz bzw. eine Anlage für die Federeinrichtung 34 bildet und ein zweites Widerlagerelement 62 fest am Gehäuse 4 bzw. am Lagerbock 24 angebracht ist. Das erste und das zweite Widerlagerelement 60, 62 können relativ zueinander schwenkbar miteinander in Verbindung stehen, beispielsweise indem das erste Widerlagerelement 60 eine konvexe Oberseite aufweist und das zweite Widerlagerelement 62 eine konkave Unterseite aufweist, die miteinander eingreifen und dadurch ein Gelenk bilden. Vorzugsweise sind das erste und das zweite Widerlagerelement 60, 62 um eine Lagerachse schwenkbar miteinander verbunden, die parallel zur Schwenkachse S verläuft. Durch die Federkraft drückt das erste Widerlagerelement 60 gegen das zweite Widerlagerelement 62 und zentriert sich selbst. Andere Ausführungsformen des Widerlagers 54, beispielsweise in Form eines einachsigen Gelenks bzw. Scharniers sind dem Fachmann ersichtlich.

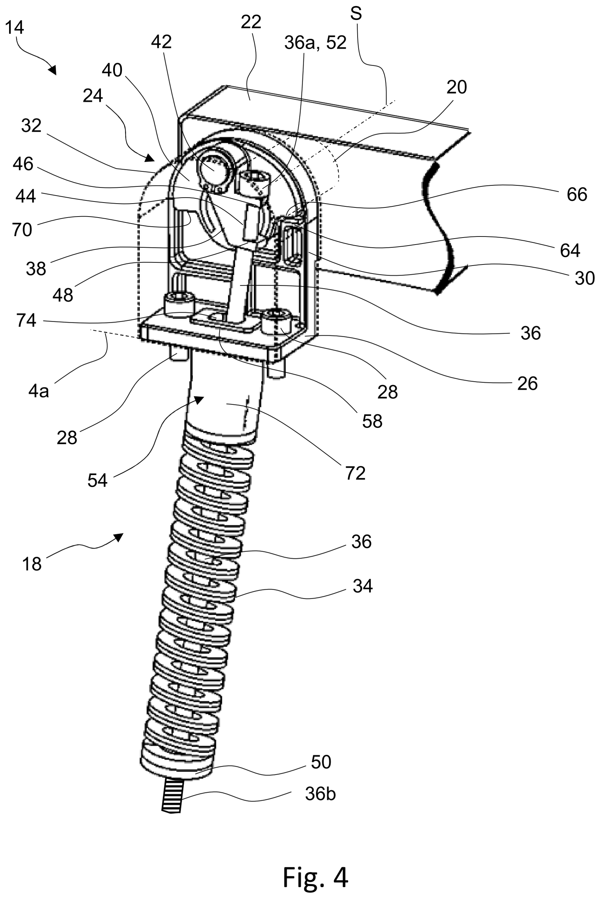

Alternativ kann das zweite Widerlager 54 gemäß der in Fig. 4 dargestellten zweiten Ausführungsform einteilig ausgebildet sein. Die zweite Ausführungsform unterscheidet sich lediglich in der einteiligen Ausbildung des zweiten Widerlagers 54 von der ersten Ausführungsform, sodass bezüglich aller weiteren Komponenten und Merkmale der Lagereinrichtung 14 die Beschreibung der ersten Ausführungsform analog zutrifft.

In der zweiten Ausführungsform umfasst das zweite Widerlager 54 ein elastisches Element 72 oder kann aus diesem bestehen. Das elastische Element 72 kann einen Sitz bzw. eine Anlage für die Federeinrichtung 34 bilden und fest am Gehäuse 4 bzw. am Lagerbock 24 angebracht sein. Das elastische Element 72 weist eine Öffnung 74 auf, durch die die Verbindungsstange 36 hindurch- und in den Lagerbock 24 eintritt. Das elastische Element 72 kann wiederum in der Durchgangsöffnung 58 im Boden 26 des Lagerbocks 24 sowie in der Oberfläche 4a des Gehäuses 4 angeordnet sein. Um die Bewegung der Verbindungsstange 36 während der Kippbewegung des Deckels zu ermöglichen, ist das elastische Element 72 elastisch verformbar.

Schließlich kann die Lagereinrichtung 14 einen oder mehrere Anschläge aufweisen, um bestimmte Positionen des Deckels 8 zu definieren. Zum Beispiel weist die Lagereinrichtung 14 am Lagerbock 24 einen ersten Anschlag 64 auf, der beispielsweise als Vorsprung an der Seitenwand 30 des Lagerbocks 24 ausgebildet ist. Die Scheibe 40 kann einen zweiten Anschlag 66 aufweisen, beispielsweise in Form einer Stufe an der Scheibe 40. Wie in Fig. 2 zu sehen, können der erste und der zweite Anschlag 64, 66 miteinander in Kontakt stehen, wenn sich der Deckel 8 in der geschlossenen Stellung befindet. Die geschlossene Stellung kann aber auch dadurch definiert sein, dass der Deckel 8 auf dem Gehäuse 4 aufliegt. Weiterhin kann die Lagereinrichtung 14 am Lagerbock 24 einen dritten Anschlag 68 aufweisen und kann die Scheibe 40 einen vierten Anschlag 70 aufweisen, die, wie in Fig. 3 zu sehen, miteinander in Kontakt stehen, wenn sich der Deckel in der geöffneten Stellung befindet. Dadurch kann vermieden werden, dass der Deckel 8 nach hinten überkippt.

Die Funktionsweise der Unterstützungseinrichtungen 18 wird nachfolgend anhand der Figuren 2 und 3 beschrieben. Zunächst befindet sich der Deckel 8 in der in Fig. 1 und 2 dargestellten geschlossenen Stellung, in der er den Garraum 6 verschließt und auf dem Gehäuse 4 aufliegen kann. Der Deckel 8 ist bevorzugt im Wesentlichen waagrecht angeordnet. Ein Schwenkwinkel α des Deckels (siehe Fig. 1) beträgt in der geschlossenen Stellung bevorzugt 0°. Der Drehkopf 42 des Hebels 38 befindet sich in seiner obersten Stellung, im Wesentlichen in einer "12:00 Uhr"-Stellung bezüglich der Schwenkachse S bzw. in einem oberen Totpunkt. Hier wirkt die größte Federkraft der Federeinrichtung 34, da diese maximal komprimiert ist, jedoch der geringste Hebel und damit das geringste durch die Federeinrichtung 34 bewirkte Gegendrehmoment. Der Hebel des Gegendrehmoments ist definiert als der Abstand zwischen der Achse, um die der Hebel 38 drehbar an der Scheibe 40 angebracht ist, und der Schwenkachse S des Deckels 8 in einer Richtung senkrecht zur Richtung der Federkraft. Ist der Drehkopf 42 direkt über der Schwenkachse S angeordnet, ist der Hebel des Gegendrehmoments null und es wird kein Gegendrehmoment erzeugt.

Wird der Deckel 8 nun nach oben geschwenkt, wandert der Drehkopf 42 um die Schwenkachse S, hier entgegen dem Uhrzeigersinn, wodurch der Hebel des Gegendrehmoments zunimmt. Mit zunehmender Ausschwenkung des Deckels 8 vergrößert sich die Hebelwirkung des Hebels 38 und damit das Gegendrehmoment, wobei sich ab einem vorbestimmten Schwenkwinkel α ein Momentengleichgewicht zwischen dem Drehmoment durch das Gewicht des Deckels und der Summe der Gegendrehmomente aller Unterstützungseinrichtungen 18 einstellt. Theoretisch ist unterhalb des vorbestimmten Schwenkwinkels das von dem Deckel 8 erzeugte Drehmoment größer als die Summe der Gegendrehmomente, während oberhalb des vorbestimmten Schwenkwinkels die Summe der Gegendrehmomente größer als oder gleich dem vom Deckel 8 erzeugten Drehmoment ist.

In Fig. 3 befindet sich der Deckel 8 nun in einer geöffneten Stellung. Es kann sich bereits um die vollständig geöffnete Stellung handeln oder um eine geöffnete Stellung zwischen der geschlossenen und der vollständig geöffneten Stellung. Der Drehkopf 42 des Hebels 38 befindet sich nun in einer maximal ausgelenkten Stellung, die auch als "9:00 Uhr"-Stellung bezüglich der Schwenkachse S bezeichnet werden kann, was der größten Hebelwirkung entspricht. In der Stellung gemäß Fig. 3 wirkt weiterhin ein Gegendrehmoment auf den Deckel 8, das größer ist als das durch den Deckel 8 bewirkte Drehmoment, sodass der Deckel 8 in seiner hochgeschwenkten Stellung verbleibt.

Mit der vorliegenden Erfindung wird somit eine Lagereinrichtung für den Deckel eines gewerblichen Gargeräts bereitgestellt, die eine sichere, zuverlässige und einfache Handhabung des schweren Deckels ermöglicht.

### Bezugszeichenliste

- 2: Gargerät
- 4: Gehäuse
- 4a: Oberfläche
- 6: Garraum
- 8: Deckel
- 10: Bedienelement
- 12: Anzeigeeinrichtung
- 14: Lagereinrichtung
- 16: Griff
- 18: Unterstützungseinrichtung
- 20: Lagerelement
- 22: Lasche
- 24: Lagerbock
- 26: Boden
- 28: Schraube
- 30: Seitenwand
- 32: Abdeckung
- 34: Gegenkrafteinrichtung
- 36: Verbindungsstange
- 36a: erster Endabschnitt
- 36b: zweiter Endabschnitt
- 38: Hebel
- 40: Scheibe
- 42: Drehkopf
- 44: Lagergabel
- 46: oberer Schenkel
- 48: unterer Schenkel
- 50: Halteplatte
- 52: Schraubenkopf
- 54: zweites Widerlager
- 56: Öffnung
- 58: Durchgangsöffnung
- 60: erstes Widerlagerelement
- 62: zweites Widerlagerelement
- 64: erster Anschlag
- 66: zweiter Anschlag
- 68: dritter Anschlag
- 70: vierter Anschlag
- 72: elastisches Element
- 74: Öffnung

## Patentansprüche

1. Gewerbliches Gargerät (2) zum Garen von Gargütern mit:
einem Gehäuse (4) und einem tiegelförmigen Garraum (6) zur Aufnahme eines Garmediums und/oder eines Garguts, der in dem Gehäuse (4) ausgebildet ist, und
einem Deckel (8) zum Verschließen des tiegelförmigen Garraums (6), wobei der Deckel (8) mittels zumindest zweier Lagereinrichtungen (14) zwischen einer geschlossenen Stellung und einer geöffneten Stellung um eine Schwenkachse (S) schwenkbar am Gehäuse (4) gelagert ist,
wobei die zumindest zwei Lagereinrichtungen (14) jeweils eine Unterstützungseinrichtung (18) umfassen, die dazu eingerichtet ist, in Abhängigkeit von der Schwenkstellung des Deckels (8) ein vorbestimmtes Gegendrehmoment auszuüben, das einem durch den Deckel (8) erzeugten Drehmoment entgegenwirkt,
wobei die Unterstützungseinrichtungen (18) der zumindest zwei Lagereinrichtungen (14) derart ausgelegt sind, dass ab einem vorbestimmten Schwenkwinkel (α) des Deckels (8) ausgehend von der geschlossenen Stellung des Deckels (8) die Summe aller Gegendrehmomente größer oder gleich dem durch den Deckel (8) erzeugten Drehmoment ist.

2. Gewerbliches Gargerät (2) nach Anspruch 1, **dadurch gekennzeichnet, dass** sich die Unterstützungseinrichtungen (18) der zumindest zwei Lagereinrichtungen (14) im Wesentlichen parallel zu einer Richtung erstrecken, die radial zu der Schwenkachse (S) ausgerichtet ist.

3. Gewerbliches Gargerät (2) nach Anspruch 1 oder 2, **dadurch gekennzeichnet, dass** der Deckel (8) zumindest zwei Lagerelemente (20) umfasst, die drehfest mit dem Deckel (8) verbunden sind, wobei jeweils ein Lagerelement (20) mittels einer der zumindest zwei Lagereinrichtungen (14) um die Schwenkachse (S) drehbar am Gehäuse (4) gelagert ist, wobei die zumindest zwei Lagerelemente (20) jeweils mit einer der Unterstützungseinrichtungen (18) der zumindest zwei Lagereinrichtungen (14) gekoppelt sind.

4. Gewerbliches Gargerät (2) nach Anspruch 3, **dadurch gekennzeichnet, dass** sich die Unterstützungseinrichtungen (18) der zumindest zwei Lagereinrichtungen (14) von den Lagerelementen (20) aus in das Gehäuse (4) des Gargeräts (2) erstrecken.

5. Gewerbliches Gargerät (2) nach Anspruch 3 oder 4, **dadurch gekennzeichnet, dass** der tiegelförmige Garraum (6) in einer Oberfläche (4a) des Gehäuses (4) ausgebildet ist und sich die Unterstützungseinrichtungen (18) der zumindest zwei Lagereinrichtungen (14) von den Lagerelementen (20) aus unter die Oberfläche (4a) des Gehäuses (4) erstrecken.

6. Gewerbliches Gargerät (2) nach einem der Ansprüche 3 bis 5, **dadurch gekennzeichnet, dass** die Unterstützungseinrichtungen (18) der zumindest zwei Lagereinrichtungen (14) jeweils eine Gegenkrafteinrichtung (34) umfassen, die exzentrisch mit dem Lagerelement (20) verbunden ist und die dazu eingerichtet ist, eine das Gegendrehmoment bewirkende Gegenkraft zu erzeugen.

7. Gewerbliches Gargerät (2) nach Anspruch 6, **dadurch gekennzeichnet, dass** die Gegenkrafteinrichtung (34) über eine Verbindungsstange (36) exzentrisch mit dem Lagerelement (20) verbunden ist.

8. Gewerbliches Gargerät (2) nach Anspruch 7, **dadurch gekennzeichnet, dass** die Gegenkrafteinrichtung (34) über die Verbindungsstange (36) an einem Hebel (38) angreift, der exzentrisch mit einer Scheibe (40) verbunden ist, wobei die Scheibe (40) mit dem Lagerelement (20) drehfest gekoppelt ist.

9. Gewerbliches Gargerät (2) nach einem der Ansprüche 6 bis 8, **dadurch gekennzeichnet, dass** die Gegenkrafteinrichtung (34) als Federeinrichtung, vorzugsweise als Druckfeder, ausgebildet ist.

10. Gewerbliches Gargerät (2) nach Anspruch 9 in Abhängigkeit von Anspruch 7, **dadurch gekennzeichnet, dass** sich die Verbindungsstange (36) durch die Federeinrichtung erstreckt und mit einem ersten Widerlager zusammenwirkt, das vorzugsweise als Halteplatte (50) ausgebildet ist, gegen die die Federeinrichtung drückt.

11. Gewerbliches Gargerät (2) nach einem der Ansprüche 9 oder 10 in Abhängigkeit von Anspruch 7, **dadurch gekennzeichnet, dass** die zumindest zwei Lagereinrichtungen (14) jeweils ein zweites Widerlager (54) für die Federeinrichtung umfassen, an dem die Federeinrichtung abgestützt ist, wobei das zweite Widerlager (54) eine Öffnung (56) aufweist, durch die die Verbindungsstange (36) hindurchtritt.

12. Gewerbliches Gargerät (2) nach Anspruch 11, **dadurch gekennzeichnet, dass** das zweite Widerlager (54) in einer Durchgangsöffnung (58) in der Oberfläche (4a) des Gehäuses (4) des Gargeräts (2) angeordnet ist.

13. Gewerbliches Gargerät (2) nach Anspruch 11 oder 12, **dadurch gekennzeichnet, dass** das zweite Widerlager (54) zumindest zweiteilig ausgebildet ist, wobei das zweite Widerlager (54) ein erstes Widerlagerelement (60) und ein zweites Widerlagerelement (62) umfasst, die relativ zueinander schwenkbar in Verbindung stehen.

14. Gewerbliches Gargerät (2) nach Anspruch 13, **dadurch gekennzeichnet, dass** das erste Widerlagerelement (60) einen Sitz für die Federeinrichtung bildet und das zweite Widerlagerelement (62) fest am Gehäuse (4) angebracht ist.

15. Gewerbliches Gargerät (2) nach Anspruch 11 oder 12, **dadurch gekennzeichnet, dass** das zweite Widerlager (54) einteilig ausgebildet ist und ein elastisches Element umfasst.

16. Gewerbliches Gargerät (2) nach einem der Ansprüche 11 bis 15, **dadurch gekennzeichnet, dass** das zweite Widerlager derart ausgebildet ist, dass die Verbindungsstange durch einen Winkelbereich von 5° bis 25°, vorzugsweise von 5° bis 15° bewegbar ist.

17. Gewerbliches Gargerät (2) nach einem der vorangehenden Ansprüche, **dadurch gekennzeichnet, dass** der vorbestimmte Schwenkwinkel (α) zwischen 5° und 45°, bevorzugt zwischen 10° und 30° beträgt.

18. Gewerbliches Gargerät (2) nach einem der vorangehenden Ansprüche, **dadurch gekennzeichnet, dass** die Unterstützungseinrichtungen (18) der zumindest zwei Lagereinrichtungen (14) derart ausgelegt sind, dass sich der Deckel (8) in allen Positionen zwischen dem vorbestimmten Schwenkwinkel (α) des Deckels (8) und einem Schwenkwinkel (α) von 90°, vorzugsweise zwischen dem vorbestimmten Schwenkwinkel (α) und der geöffneten Stellung des Deckels (8), im Gleichgewicht befindet.

19. Gewerbliches Gargerät (2) nach einem der vorangehenden Ansprüche, **dadurch gekennzeichnet, dass** das Gargerät (2) ein Kochkessel ist.
